Europäisches Patentamt

**European Patent Office**

Office européen des brevets

(11) Publication number: **0 158 167**
**A2**

(12) # EUROPEAN PATENT APPLICATION

(21) Application number: **85103140.1**

(22) Date of filing: **19.03.85**

(51) Int. Cl.⁴: **G 07 F 7/08**

(30) Priority: **21.03.84 US 591987**

(43) Date of publication of application:
**16.10.85 Bulletin 85/42**

(84) Designated Contracting States:
**CH DE FR GB IT LI SE**

(71) Applicant: **Atalla Corporation**
**2363 Bering Drive**
**San Jose California 95131(US)**

(72) Inventor: **Atalla, Martin M.**
**18 Montevista**
**Atherton, CA. 94025(US)**

(74) Representative: **Liesegang, Roland, Dr.-Ing.**
**Sckellstrasse 1**
**D-8000 München 80(DE)**

(54) Document security system, method and apparatus.

(57) Distinct physical characteristics of a document are detected and encoded for recordation on the document in encrypted form. Subsequent use of the document is controlled in response to user codes and a comparison of the physical characteristics of the document as currently sensed with those as previously sensed and recorded in encrypted. Favorable comparison within tolerance limits of variation indicates an authorized user and an unaltered, authentic document.

Figure 1

Croydon Printing Company Ltd

# DOCUMENT SECURITY SYSTEM, METHOD AND APPARATUS

0158167

## Background of the Invention

Commercial transactions are commonly completed with reference to a document the authenticity and unaltered status of which are vital factors. Securities transactions which involve stock certificates and bank transactions which involve checks, passbooks, credit cards, and the like, all depend in various ways upon the authentic and unaltered status of such documents to service the account of a customer, client or user quickly and without error. In such transactions where a document representing some value is involved, there is great incentive for unscrupulous operators to duplicate, counterfeit or in some way alter the document in order to derive undeserved value from the transaction.

Many schemes have been established for detecting the authenticity of documents and the authority of an individual involved in completing a transaction. Such schemes include physical, optical, magnetic or electrical detectors in various combinations to check for certain indicia of authenticity of the document and to obtain certain information therefrom for use in completing an associated transaction. Schemes of this type are disclosed in the literature (see, for example, U. S. Patents 4,140,272, 4,138,058 and 4,138,057).

It would be desirable to update the data associated with a document to account for changes due to age, frequency of use, altered physical characteristics and the like, during normal use

1

to assure that the document may continue to be used despite normal changes in its physical properties which may adversely affect rigid security detection schemes.

## Summary of the Invention

In accordance with the present invention, a document such as a bearer certificate or credit card, or the like, is formed in a manner that includes detectable physical characteristics which are unique for the specific document. In addition, the present invention includes an encoding system which translates user information and the detected physical characteristics of the document into encrypted data that is recorded on the document for subsequent comparisons and updates as the document is used. In this manner, the normal aging or deterioration of the document through continued use can be accounted for without losing the encrypted data or the security aspects associated therewith.

## Description of the Drawings

Figure 1 is a pictorial diagram of a document-detecting apparatus according to the present invention; and

Figure 2 is a graph showing amplitudes of readings along portions of the document being detected according to the apparatus of Figure 1;

Figure 3 is a schematic diagram of one embodiment of the logic unit of Figure 1; and

Figure 4 is a flow chart which illustrates the operation of the apparatus of Figures 1 and 3.

2

## Description of the Preferred Embodiment

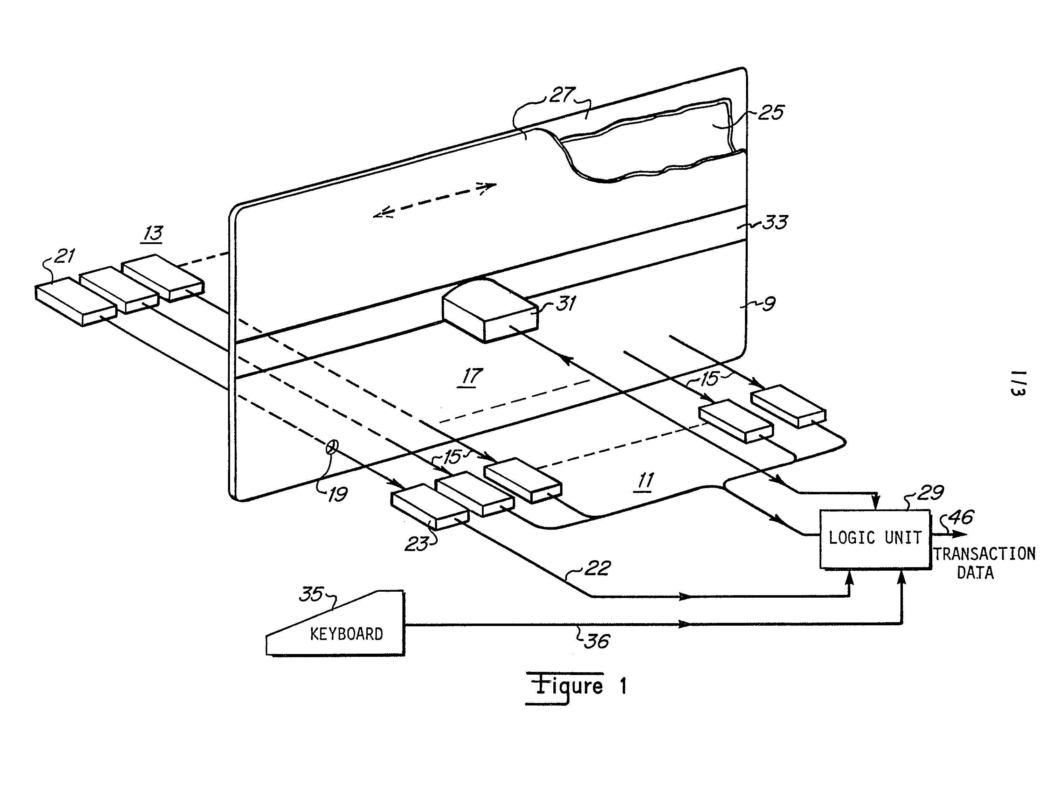

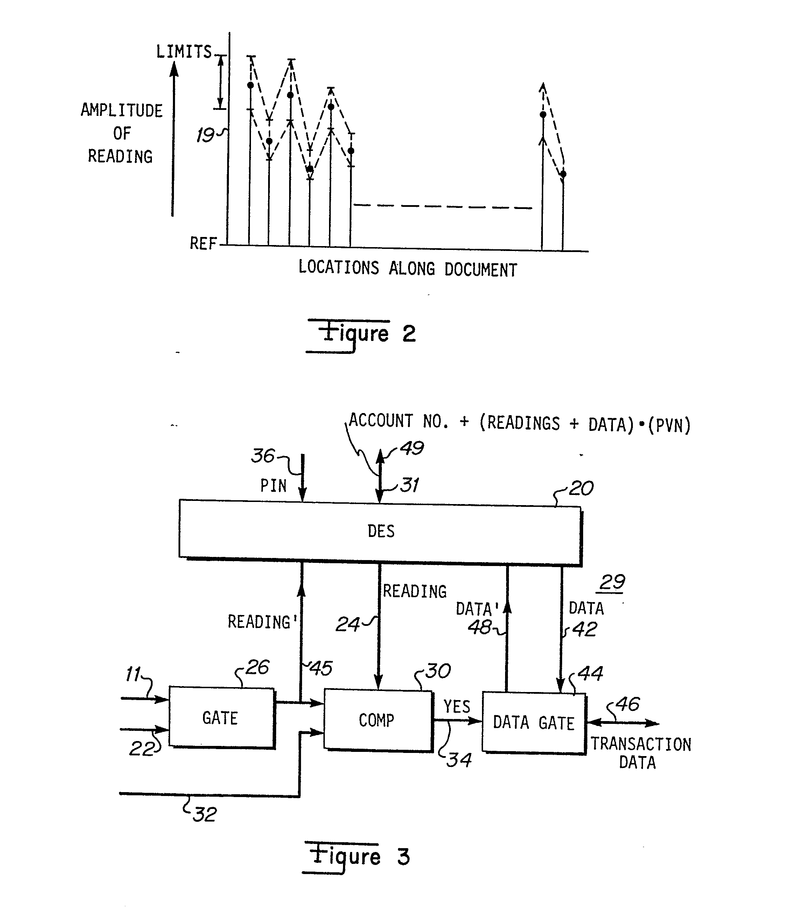

Referring now to Figure 1, there is shown one embodiment of the present invention in which a document 9 is interposed between an array of detectors 11 and an array of sources 13 that cooperate with the detectors 11 to produce qualitative responses indicative of the document 9 being interposed between the corresponding sets of sources and detectors 11, 13. Specifically, the sources 13 may produce beams of optical radiation 15 that are detected by the associated optical detectors 11, each of which responds in a manner that is representative of the optical properties of the document 9 at the specific location thereon where the corresponding beam traverses the document 9. Thus, as shown on the graph of Figure 2, the responses by the detectors 11 will in general be different at different locations along the test region 17 on document 9. An optical part or aperture 19 may be provided in the document 9 to align with source 21 and detector 23 for establishing a reference position for repeatably orienting the document 9 at the same test location relative to the arrays of sources 13 and detectors 11. An edge of the document 9 may also be detected. However, the positioning accuracy provided thereby is likely to deteriorate as the edge erodes or is otherwise destroyed from continued use. Of course, it should be understood that other forms of radiative energy may also be used to detect other physical properties of a document 9. For example, high-frequency electrostatic field sources may be detected capacitively with responses that are indicative of the properties of the interposed document 9 at the specific test locations therealong in the test region 17. Thus, for optical sources and detectors 11, 13 the optical transmissivity of the document 9 at each location will affect the "analog" or level readings at each location. Similarly, for R.F. electrostatic field sources and detectors 11, 13, the electrical conductivity of conductive inks on the document 9 at each location will also affect the readings at each location.

In one preferred embodiment, it has been determined that paper provides distinctive readings on narrow optical beams disposed at spaced locations for reasons that are believed to be associated with inhomogeneous orientations of fibrous materials and fillers of which the paper is formed. Thus, where the document is a credit card, it is desirable to laminate and encapsulate a layer of paper 25 between outer laminates 27 of sheet-like plastic in order to form an inexpensive and highly distinctive encoding medium that will not change significantly with time, temperature, humidity, and the like. Such a document (or credit card) 9 may therefore be detected or read to determine its unique "signature" of detected values, as shown in Figure 2, at the spaced locations. These readings are converted to digital equivalent values by conventional means (not shown) such as analog-to-digital converters associated with each detector 11. Thus, a particular document 9 may be identified by a unique set of digital values such as 155, 130, 152, 120, 145, 128, ----, 132 from the array of detectors 11 and associated digitizers. However, these values are likely to change in small amounts as

4

the document 9 becomes dirty or wrinkled or abraded, or the like, from repeated usage.

In the preferred embodiment, the logic unit 29 tolerates a margin of deviation in the detected values and then records the updated values in an encrypted manner, if other security checks are satisfied. The newly-recorded reading values are thereafter used as the updated standards for comparison in the next transaction.

In operation, the document (or credit card) 9 is moved along a path relative to transducer 31 by conventional means to enable the sources and detectors 11, 13 to extract recorded data from the record area 33 when the document 9 is positioned precisely at the reference location as determined by aperture 19 and the source 21 and detector 23. The digitized readings from detectors 11 when the document 9 is located at the reference location are used as encryption inputs, along with other data from the document 9 and other data supplied by the user via keyboard 35. The transducer 31 (preferably a magnetic transducer operating on magnetic recording stripe 33) extracts encrypted data signals from the document 9 that include, for example, the account number of the authorized user, the values of readings previously taken, and such other data as account balance, credit limits, and the like.

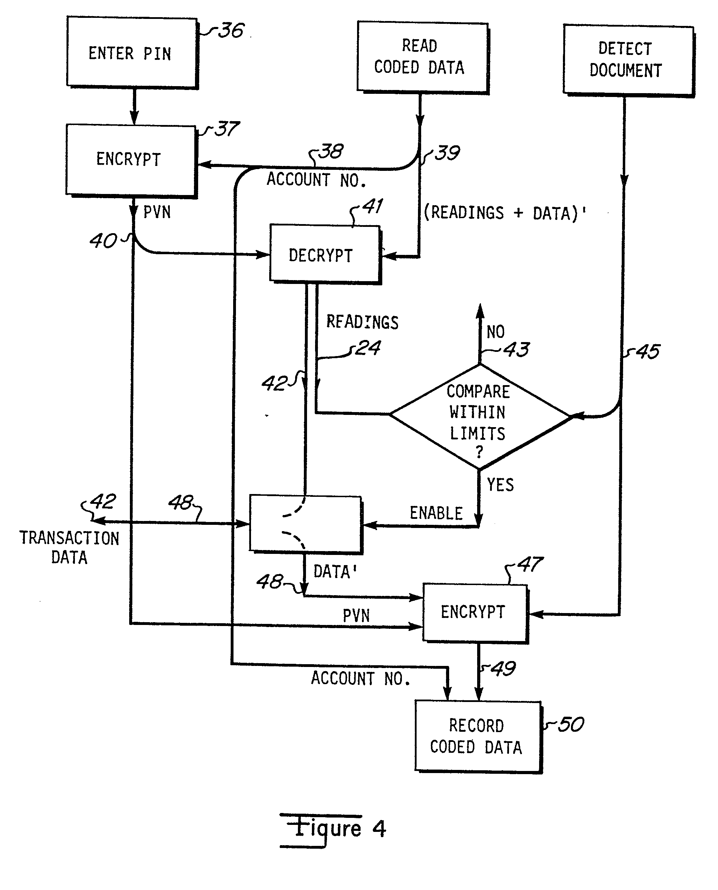

In the illustrated embodiments of Figures 3 and 4, the authorized user enters his Personal Identification Number (PIN) 36 via the keyboard 35 for encryption 37 in module 20 with other data. The Data Encryption Standard (DES) module 20 of

5

conventional type (available as an integrated circuit manufactured by the Motorola Corp.) may be operated either to encrypt or decrypt signals applied to inputs thereof. Thus, the signals derived from the document 9 by magnetic transducer 31 may be formatted to include the account number 38 of the user in clear text, plus data 39 about the user's account and previous readings taken from the document 9 at the spaced locations, all encrypted 37 in accordance with a logical combination or encryption standard in module 20 that is determined by the user's Personal Verification Number (PVN). This PVN may be formed first by encrypting in module 20 the account number with the PIN 36 from keyboard 35, and the resulting PVN may be stored only in the module 20 to serve as the secured key code for decrypting the signals from transducer 31. If the resulting PVN 40 is correct for the current user, then the signals from transducer 31 are decrypted 41 to yield the previously-recorded digitized readings 24 of the document 9 at the specific locations, along with such other data 42 as the user's account information, and the like. The data signals extracted from the document 9 were previously encrypted using PVN as an encryption key, as later described in connection with completion of the current transaction. Similarly, the document 9 may be initialized upon first use by a authorized user by entering account number 38, the user's PIN 36 and associated account data for encryption 47 and recordation 49 on the document.

The decrypted data signals 42 thus include, among other things, data concerning the user's account and the reading value regarding the document 9 as previously interrogated in the prior transaction. These previous readings 24 as recorded and decrypted are compared 43 with a current set of digitized readings 45 of the document 9 under the conditions of the document 9 being in proper location. The signal 22 formed by the optical shutter comprising source 21, aperture 19 and detector 23 enables gate 26 when the document 9 is properly located to produce the current set of digitized readings 45. The current set of readings 45 and the decrypted set of readings 24 are applied to the inputs of a conventional comparator 30 which compares 43 corresponding ones of the sets of readings for parity within tolerance or error limits. In one embodiment, a digital counter is incremented on the first decrypted reading and decremented on the first current reading to yield zero count (plus or minus a preset limit or tolerance count), and sequentially or serially, is incremented on the second decrypted reading .and decremented on the second current reading, and so on. The tolerance limit about zero count may be controlled by preset counts, or other conventional means applied to input 32.

If the decrypted readings 24 and the current readings 28 compare favorably within the preset tolerance limits, the output 34 from comparator 30 enables the gate 44 to supply data 46 for completing a transaction. The data as modified 48 by such transaction is then applied to inputs of the data encryption module 20 for encryption 47 with the current set of readings 45 under the control of the PVN signal previously prepared and stored in the module 20. The newly-encrypted data 49 containing the updated, current readings, and other data are then recorded 50 on the document 9 by such conventional means as a magnetic transducer 31 operating on magnetic recording stripe 33, or a bar-code reader/printer for optical reading and writing, or the like. In this way, the reading values from the document 9 are updated to compensate for deterioration of the physical properties of the document 9 that establish its unique "signature". Tight limits of comparison 43 may therefore be maintained in order to assure a high level of discrimination between distinctive documents 9.

015818

What is claimed is:

1. Apparatus for operating on coded data which is indicative of selected physical characteristics of the document from which the coded data is obtained, the apparatus comprising:

first means responsive to selected physical characteristics of the document for producing first signals indicative of such selected physical characteristics; and

means for applying to the document for storage thereon an encoded representation of the first signals.

2. Apparatus according to claim 1, comprising:

second means responsive to coded data on the document for producing second signals that are representative thereof:

circuit means responsive to second signals for producing output signals representative of the decoded data indicative of the selected physical characteristics of the document; and

comparator means responsive to the first signals and to the output signals for producing an output in response to said signals bearing a predetermined relationship to each other; and

wherein said means is responsive to said output for applying to the document for storage thereon an encoded representation of the first signals.

3. Apparatus as in claim 2 wherein said first means includes a plural number of corresponding sources and detectors of electromagnetic radiation disposed with respect 'to the document for producing said first signals as coded representations of the response of each detector and corresponding source to the electromagnetic radiation properties of the document at spaced locations thereon.

4. Apparatus as in claim 2 for operation on documents having magnetic records thereon, wherein

said second means includes a magnetic transducer for producing said second signals representative of the manifestations of coded data in the magnetic record of the document; and

said first means includes digitizing means for producing said first signals as digital representations of the selected physical characteristics.

5. Apparatus as in claim 3 including means responsive to the position of said document with respect to said sources and detectors for producing an output indication of said detectors being disposed at said spaced locations.

6. Apparatus as in claim 5 for operation with documents having a positioning aperture therein, wherein said means responsive to position includes a source and detector of electromagnetic radiation disposed with respect to said spaced locations to produce an output response indicative of alignment of the source and detector with a positioning aperture in the document; and

means responsive to said output response for producing said first signals.

7. Apparatus as in claim 2 wherein said comparator means produces said output in response to each of said first signals and corresponding ones of said output signals being substantially equal within predetermined limits of variation.

8. Apparatus for operation with a document that is unique to a user and that contains encoded data recorded thereon and that has detectable unique physical characteristics at selected locations thereon, the apparatus comprising:

transducer means responsive to encoded data recorded on a document for producing signals representative thereof;

means responsive to an applied key signal for decoding the signals produced by the transducer means to provide data signals indicative of information about the user and to provide data signals indicative of information about the physical characteristics of the document at selected locations thereon;

detector means responsive to the physical characteristics of the document as detected at said selected locations for producing data signals representative thereof;

comparator means responsive to the data signals decoded by said means and to the data signals produced by said detector

11

means for producing, in response to said data signals attaining a predetermined relationship, an output which indicates authorization to proceed with a transaction involving the data signals indicative of information about the user; and

circuit means including the transducer means for recording on said document encoded data representative of data signals associated with the transaction and the data signals produced by the detector means as encoded in accordance with said key signal.

9. Apparatus as in claim 8 comprising encryption means responsive to data regarding the user of the document for producing said key signal in accordance with a logical combination of plural data signals from the user.

10. A document for use in transactions that are controlled by data pertaining to the document and to an authorized user thereof, the document comprising:

at least one sheet-like lamina of fibrous material and at least one sheet-like lamina of plastic material bonded to said lamina of fibrous material to form a composite structure having at least one substantially planar plastic surface having optical characteristics which are different at spaced locations thereon; and

means on said plastic surface for selectively recording data in detectable form thereon.

12

11. A document as in claim 10 wherein said composite structure includes a sheet-like lamina of fibrous material interposed between and bonded to a pair of sheet-like plastic laminae, and includes an aperture therethrough at a location thereon which is at a preselected orientation with respect to said spaced locations; and

said means includes magnetically recordable material bonded to the outer surface of one of said plastic laminae.

12. The method of operating on a document which includes encoded data stored thereon pertaining to physical characteristics detected at spaced locations on the document and to an authorized user of the document, the method comprising:

decoding the encoded data stored on the document to provide information pertaining to the authorized user and to the physical characteristics of the document as stored thereon;

detecting physical characteristics at said spaced locations on the document to provide information about the document as detected at said spaced locations;

comparing the information about the document as decoded from the encoded data stored thereon with the information about the document as detected to provide an output manifestation of a predetermined relationship attained therebetween;

controlling a transaction involving the authorized user and the decoded information pertaining thereto in response to said output manifestation; and

13

applying to said document for storage thereon encoded data including manifestations of the physical characteristics of the document as detected at said spaced locations and of information pertaining to the user following the transaction.

13. The method according to claim 12 wherein in the step of decoding:

the encoded data from the document is decoded in response to a code key which is formed as the logical combination of a plural number of data codes associated with the authorized user; and

wherein in the step of applying, the data including manifestations of the physical characteristics of the document as detected and of the information pertaining to the user are encoded in response to said code key.

14. The method according to claim 12 wherein in the step of comparing, the output manifestation is produced in response to the information about the document as decoded attaining substantial parity within preselected limits of variation with the information about the document as detected.

14

Figure 1

0158167

$$\text{Figure 2}$$

ACCOUNT NO. + (READINGS + DATA)·(PVN)

$$\text{Figure 3}$$

Figure 4